# EUROPÄISCHE PATENTANMELDUNG

(11) **EP 1 541 399 A1**
(43) Veröffentlichungstag der Anmeldung: **15.06.2005**
(21) Anmeldenummer: 04029374.8
(22) Anmeldetag: 10.12.2004
(51) Int. Cl.: B60J 7/043, B60J 7/047

(54) **Fahrzeugdach mit zwei öffnungsfähigen Deckeln**

(30) Priorität: 10.12.2003 DE 10358068
(71) Anmelder: Webasto AG, 82131 Stockdorf (DE)
(72) Erfinder: Seifert, Wolfgang, 82407 Wielenbach (DE)

(57) **Zusammenfassung**

Die Erfindung betrifft ein Fahrzeugdach mit zwei öffnungsfähigen Deckeln (18, 20), bei dem der hintere Deckel (20) an seiner Vorderkante (20V) absenkbar ist und der vordere Deckel (18) zumindest teilweise über den hinteren Deckel (20) in dessen abgesenkter Position verfahrbar ist. Erfindungsgemäß ist vorgesehen, dass der vordere Deckel (18) mit seiner Hinterkante (18H) ausstellbar und mittels nahe seiner Hinterkante (18H) angeordneter Abstützvorrichtungen (24) an Führungen (26) verfahrbar ist, die seitlich des als Spoilerdeckel ausgebildeten hinteren Deckels (20) angeordnet sind.

## Beschreibung

Die Erfindung betrifft ein Fahrzeugdach mit zwei öffnungsfähigen Deckeln gemäß dem Oberbegriff des Patentanspruchs 1.

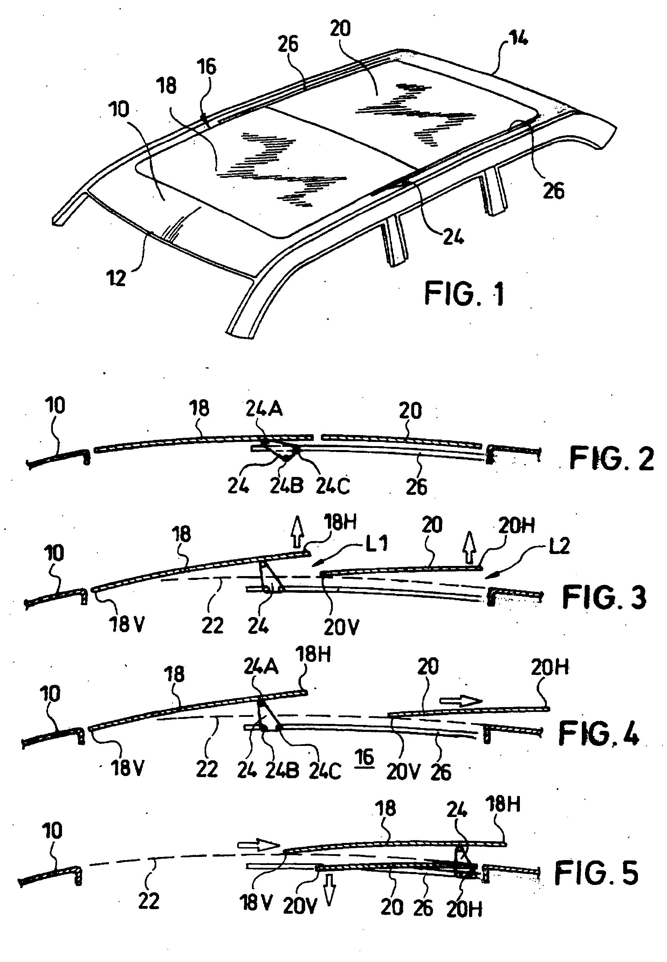

Eine derartiges Fahrzeugdach ist aus der DE 100 13 723 A1 bekannt. Bei diesem ist der hintere Deckel an seiner Vorderkante absenkbar und der als Spoilerdach ausgebildete vordere Deckel kann in einer von mehreren Öffnungsvarianten (gemäß Fig. 3C) zumindest teilweise über den abgesenkten hinteren Deckel gefahren werden. Die Größe der maximal freilegbaren Dachöffnung entspricht dabei nur einem Teil der Länge des vorderen Deckels. Die Abstützung des vorderen Deckels erfolgt dabei in der für Spoilerdeckel typischen Weise nur im vorderen Drittel, so dass die Hinterkante insbesondere bei hohen Fahrzeuggeschwindigkeiten starken Schwingungen aufgrund der auftretenden Windkräfte ausgesetzt ist.

Ferner ist aus der DE 37 30 112 A1 ein Fahrzeugdach mit zwei Deckel bekannt, dessen hinterer Deckel komplett soweit absenkbar ist, dass der vordere Deckel über diesen nach hinten verschoben werden kann. Lüfterpositionen mittels einer Ausstellung der Deckelhinterkanten sind dort nicht realisierbar.

Ein weiteres Fahrzeugdach mit zwei öffnungsfähigen Deckeln und einer Öffnungsvariante, bei der der vordere Deckel unter den ausgestellten hinteren Deckel verfahrbar ist (Fign. 2C und 3B), ist aus der DE 100 11 350 A1 bekannt. Die Öffnungsvarianten umfassen dort auch Lüfterpositionen mit ausgestellten Deckelhinterkanten. Nachteilig bei diesem Fahrzeugdach ist die eingeschränkte Kopffreiheit, insbesondere der hinteren Passagiere, durch den abgesenkten und nach hinten verschobenen vorderen Deckel.

Aufgabe der Erfindung ist es, ein Fahrzeugdach zu schaffen, bei dem mehrere Öffnungsvarianten möglich sind und der vordere Deckel auch im geöffneten Zustand eine stabile Abstützung aufweist und die Erzeugung von Windgeräuschen minimiert wird.

Diese Aufgabe wird durch ein Fahrzeugdach mit den Merkmalen des Patentanspruchs 1 gelöst. Vorteilhafte Ausgestaltungen der Erfindung sind den Unteransprüchen zu entnehmen.

Dadurch, dass der vordere Deckel von einem außengeführtes Schiebedach mit einer seitlichen Abstützung nahe dem hinteren Deckelrand gebildet wird und der hintere Deckel von einem zusätzlich an der Vorderkante absenkbaren Spoilerdeckel gebildet wird, lassen sich als Öffnungspositionen ein oder zwei Lüftungsspalte bei angehobenen Deckelhinterkanten, eine mittlere Dachöffnung bei nach hinten verschobenem Spoilerdeckel und eine große vordere Dachöffnung bei nach hinten über den abgesenkten Spoilerdeckel verschobenem außengeführten Schiebedach einstellen. Durch die Absenkung des Spoilerdeckels an dessen Vorderkante ist es möglich, den Deckel des außen geführten Schiebedachs weit an den hinteren Deckel heran und zu einem großen Teil über diesen zu fahren, ohne dabei die Vorderkante des außen geführten Schiebedachs anheben zu müssen, wie dies sonst bei Dächern dieses Typs nötig ist. Somit werden in allen Öffnungspositionen Windgeräusche wirksam vermieden.

Gemäß einer vorteilhaften Ausgestaltung sind der vordere Deckel und/oder der hintere Deckel einzeln oder gleichzeitig in eine Lüfterpositionen ausstellbar. Dadurch lassen sich für die vorderen und die hinteren Passagiere separat individuelle Belüftungsbedingungen einstellen.

Gemäß einer weiteren vorteilhaften Ausgestaltung ist vorgesehen, dass der vordere Deckel eine größere Länge aufweist als der hintere Deckel und in der nach hinten geschobener Öffnungsposition mit seiner Hinterkante hinter der Hinterkante des hinteren Deckels liegt, so dass bei einer besonders vorteilhaften Ausgestaltung der vordere Deckel in dieser Position den hinteren Deckel gänzlich überdeckt.

Die Abstützvorrichtungen nahe der Hinterkante des vorderen Deckels sind bevorzugt seitlich des hinteren Deckels in Führungen unterhalb des festen Fahrzeugdachs geführt, so dass bei geschlossenem Fahrzeugdach ein glattflächiges Erscheinungsbild entsteht. Bevorzugt sind die Führungen von einer Abdeckung abgedeckt, die beispielsweise von einer flexiblen Dichtleiste gebildet werden kann, und die von den Abstützvorrichtungen beim Durchfahren in die Verschiebeposition des vorderen Deckels zur Seite bewegbar ist.

Gemäß einer weiteren vorteilhaften, zeichnerisch nicht dargestellten Option kann vorgesehen sein, dass der hintere Deckel bei abgesenkter Vorderkante zumindest teilweise unter den ausgestellten vorderen Deckel nach vorn verschiebbar ist. Dadurch lässt sich auch für die hinteren Fahrzeugpassagiere eine große Dachöffnung bereitstellen.

Der Antrieb der beiden Deckel kann durch einen gemeinsamen elektrischen Antrieb oder durch zwei getrennte Antriebe erfolgen, wobei im letzteren Fall eine gemeinsame elektronische Steuerung dafür sorgt, dass Kollisionen der Deckel durch Ausschluss von Bewegungs-Freiheitsgraden bei bestimmten Deckelpositionen verhindert werden.

Nachfolgend wird ein Ausführungsbeispiel des erfindungsgemäßen Fahrzeugdaches unter Bezugnahme auf die Zeichnungen näher erläutert. Es zeigt:
- Fig. 1: eine schematische perspektivische Teilansicht eines Fahrzeugdachs,
- Fig. 2: einen schematischen Längsschnitt durch das Fahrzeugdach gemäß Fig. 1 in geschlossenem Zustand,
- Fig. 3: einen Längsschnitt gemäß Fig. 2 mit in Lüfterpositionen ausgestellten Deckeln,
- Fig. 4: einen Längsschnitt gemäß Fig. 2 mit in Lüfterposition ausgestelltem vorderen Deckel und geöffnetem hinteren Deckel, und
- Fig. 5: einen Längsschnitt gemäß Fig. 2 mit an der Vorderkante abgesenktem hinteren Deckel und darüber geschobenen vorderen Deckel.

Das in Fig. 1 dargestellte Fahrzeugdach 10 erstreckt sich von einem oberhalb einer Frontscheibe angeordneten Windlauf 12 ist zu einer oberhalb der nicht dargestellten Heckscheibe angeordneten hinteren Dachkante 14. In festem Fahrzeugdach 10 ist eine Dachöffnung 16 vorgesehen, die mittels eines vorderen Deckels 18 und eines unmittelbar nach hinten daran anschließenden hinteren Deckels 20 verschließbar oder - wie in den Fign. 2 bis 5 gezeigt - zumindest teilweise freilegbar ist.

Der vordere Deckel 18 ist nach Art eines außen geführten Schiebedachs ausgebildet, wie dies beispielsweise aus der DE 197 13 347 C1 oder der DE 100 33 887 C1 bekannt ist. Dabei ist der Deckel nahe seiner Vorderkante 18V an der Unterseite mittels nicht dargestellter, beidseits der Dachöffnung 16 in einer Führungsschiene geführter Gleitelemente und nahe seiner Hinterkante 18H mittels dreieckhebelartiger Abstützvorrichtungen 24 abgestützt, die mit einem oberen Anlenkpunkt 24A nahe der Hinterkante des vorderen Deckels 18 angelenkt sind und die sich mit Gleitelementen 24B und 24C in Führungen 26 abstützen, die sich seitlich des hinteren Deckels 20 und unterhalb der Dachkontur 22 des festen Fahrzeugdachs 10 erstrecken. Das hintere Gleitelement 24C der beiden Gleitelemente der Abstützvorrichtung 24 ist in ständigem Eingriff mit der Führung 26, während das vordere Gleitelement 24B erst bei einer Schwenkbewegung aus der Schließposition (Fig. 2) in die Ausstellposition (Fig. 3) in die Führung 26 eintritt und den vorderen Deckel 18 bei dessen Verschiebung nach hinten (Fig. 5) stabil abstützt. Alternativ dazu kann das vordere Ende der Führung 26 auch nach unten abgebogen sein, so daß das vordere Gleitelement 24B beim Ausstellen des vorderen Deckels 18 eine Bogenbahn entsprechend der Schwenkbewegung durchläuft.

Der hintere Deckel 20 ist nach Art eines Spoilerdaches ausgebildet, so dass er um eine nahe seiner Vorderkante 20V angeordnete Schwenkachse mit seiner Hinterkante 20H über das feste Fahrzeugdach 10 ausgestellt werden kann (siehe Fig. 3) und in dieser ausgestellten Position zur Freigabe eines Teils der Dachöffnung 16 nach hinten über das feste Fahrzeugdach verschiebbar ist (siehe Fig. 4).

In Erweiterung der Funktionen eines herkömmlichen Spoilerdaches ist der hintere Deckel 20 jedoch zusätzlich um eine nahe seiner Hinterkante 20H angeordnete Schwenkachse schwenkbar, so dass sich seiner Vorderkante 20V in die Dachöffnung 16 hinein absenkt (siehe Fig. 5). Eine für eine derartige Betätigung des hinteren Deckels 20 geeignete Mechanik ist der Deutschen Patentanmeldung 103 48 545.7 entnehmbar, deren Offenbarungsgehalt hiermit in vollem Umfang zum Gegenstand der vorliegenden Anmeldung gemacht wird.

In der Schließposition gemäß Fig. 2 liegen der vordere Deckel 18 und der hintere Deckel 20 bündig hintereinander und sorgen für ein glattflächiges Erscheinungsbild des Fahrzeugdachs 10.

Ausgehend von dieser Schließposition lassen sich nacheinander oder gleichzeitig der vordere Deckel 18 und/oder der hintere Deckel 20 in eine Belüftungsposition ausstellen, wobei dabei gemäß Fig. 3 an der Hinterkante 18H des vorderen Deckels 18 ein Lüftungsspalt L1 und an der Hinterkante 20H des hinteren Deckels 20 ein Lüftungsspalt L2 freigegeben wird.

Aus dieser Position heraus lässt sich der hintere Deckel 20 in eine Öffnungsposition gemäß Fig. 4 nach hinten verschieben, wobei die Hinterkante 20H nach hinten über das feste Fahrzeugdach 10 ragt. Hierbei wird zwischen der Hinterkante 18H des vorderen Deckels 18 und der Vorderkante 20V des hinteren Deckels 20 ein Teil der Dachöffnung 16 freigelegt. Ausgehend von der in Fig. 3 dargestellten Öffnungsvariante kann der hintere Deckel 20 optional auch nach vorn unter den vorderen Deckel 18 verschoben werden, um dadurch an seiner Hinterkante 20H einen Teil der Dachöffnung 16 freizulegen.

Gemäß der in Fig. 5 dargestellten Öffnungsvariante wird der vordere Deckel 18 mit ausgestellter Hinterkante 18H über den hintere Deckel 20 geschoben, wobei zuvor die Vorderkante 20V des hinteren Deckels 20 nach unten abgesenkt wurde.

Die erfindungsgemäße Kombination aus einem vorderen außen geführten Schiebedach und einem dahinter angeordneten Spoilerdach mit absenkbar Vorderkante ermöglicht zahlreiche Lüftungsvarianten, wobei die Vorderkante 18V des vorderen Deckels 18 stets in Höhe der Kontur 22 des Fahrzeugdachs 10 bleibt und dadurch vermehrte Windgeräusche, wie sie durch das Anheben der Vorderkante bei herkömmlichen außen geführten Schiebedächern entstehen, vermieden werden.

Das Dachsystem kann als Bottom-Load-System ausgeführt sein, wobei der Rahmen mit den Führungsschienen, der Führung 26 und den Deckeln 18 und 20 von der Innenseite des Fahrzeugdaches her an die Dachöffnung herangeführt und mit dem festen Fahrzeugdach verbunden wird. Das Dachsystem kann aber auch als Top-Load-System ausgeführt sein, wobei dann die Führungen 26 über die Dachöffnung hinaus nach hinten verlängert sein können, so dass der obere Anlenkpunkt 24A der Abstützvorrichtungen 24 dann noch näher an der Hinterkante 18 H des vorderen Deckels 18 angeordnet sein kann und dieser noch weiter nach hinten in Richtung zum hinteren Dachende 14 über das feste Fahrzeugdach 1 geschoben werden kann.

### Bezugszeichenliste

- 10: Fahrzeugdach
- 12: Windlauf
- 14: hinteres Dachende
- 16: Dachöffnung
- 18: vorderer Deckel
- 18V: Vorderkante von 18
- 18H: Hinterkante von 18
- 20: hinterer Deckel
- 20V: Vorderkante von 20
- 20H: Hinterkante von 20
- 22: Dachkontur
- 24: Abstützvorrichtung
- 24A: oberer Anlenkpunkt (von 24)
- 24B: erstes Gleitelement (von 24)
- 24C: zweites Gleitelement (von 24)
- 26: Führung (für 24)
- L1: Lüftungsspalt (bei 18)
- L2: Lüftungsspalt (bei 20)

## Patentansprüche

1. Fahrzeugdach mit zwei öffnungsfähigen Deckeln (18, 20), bei dem der hintere Deckel (20) an seiner Vorderkante (20V) absenkbar ist und der vordere Deckel (18) zumindest teilweise über den hinteren Deckel (20) in dessen abgesenkter Position verfahrbar ist, **dadurch gekennzeichnet, dass** der vordere Deckel (18) mit seiner Hinterkante (18H) ausstellbar und mittels nahe seiner Hinterkante (18H) angeordneter Abstützvorrichtungen (24) an Führungen (26) verfahrbar ist, die seitlich des als Spoilerdeckel ausgebildeten hinteren Deckels (20) angeordnet sind.

2. Fahrzeugdach gemäß Anspruch 1, **dadurch gekennzeichnet, dass** der vordere Deckel (18) und/oder der hintere Deckel (20) einzeln oder gleichzeitig in eine Lüfterposition (L1 bzw. L2) ausstellbar sind.

3. Fahrzeugdach nach Anspruch 1 oder 2, **dadurch gekennzeichnet, dass** der vordere Deckel (18) in nach hinten geschobener Öffnungsposition mit seiner Hinterkante (18H) hinter der Hinterkante (20H) des hinteren Deckels (20) liegt.

4. Fahrzeugdach nach einem der vorhergehenden Ansprüche, **dadurch gekennzeichnet, dass** der vordere Deckel (18) eine größere Länge als der hintere Deckel (20) aufweist.

5. Fahrzeugdach nach einem der Ansprüche 1 bis 4, **dadurch gekennzeichnet, dass** die Führung (26) für die Abstützvorrichtung (24) unterhalb des festen Fahrzeugdachs (10) angeordnet ist.

6. Fahrzeugdach nach einem der Ansprüche 1 bis 5, **dadurch gekennzeichnet, dass** die Führung (26) von einer Abdeckung abgedeckt wird, die von der Abstützvorrichtung (24) beim Durchfahren in die Verschiebeposition des vorderen Deckels (18) zur Seite bewegbar ist.

7. Fahrzeugdach nach einem der vorhergehenden Ansprüche, **dadurch gekennzeichnet, dass** der hintere Deckel (20) bei abgesenkter Vorderkante (20V) zumindest teilweise unter den ausgestellten vorderen Deckel (18) nach vorn verschiebbar ist.

8. Fahrzeugdach nach einem der Ansprüche 1 bis 7, **dadurch gekennzeichnet, dass** der vordere Deckel (18) und der hintere Deckel (20) mittels wenigstens eines elektrischen Antriebs und einer den Antrieb bzw. die Antriebe steuernden elektronischen Steuerung betätigbar sind, wobei die Steuerung Kollisionen der Deckel (18 bzw. 20) durch Ausschluss von Bewegungs-Freiheitsgraden bei bestimmten Deckelpositionen verhindert.
